Europäisches Patentamt

European Patent Office

Office européen des brevets

(19)

(11) Numéro de publication: **0 022 891**
**A1**

(12)

# DEMANDE DE BREVET EUROPEEN

(21) Numéro de dépôt: **79870008.4**

(22) Date de dépôt: **26.06.79**

(51) Int. Cl.³: **B 62 K 25/02**

(43) Date de publication de la demande:
**28.01.81 Bulletin 81/4**

(84) Etats Contractants Désignés:
**BE FR IT**

(71) Demandeur: **Callerame, Salvatore
rue Basse Cour, no. 16
B-4300 Ans(BE)**

(71) Demandeur: **Decosseaux, Raymond
Avenue des Martyrs, no. 263
B-4620 Fleron(BE)**

(72) Inventeur: **Callerame, Salvatore
rue Basse Cour, no. 16
B-4300 Ans(BE)**

(72) Inventeur: **Decosseaux, Raymond
Avenue des Martyrs, no. 263
B-4620 Fleron(BE)**

(54) **Pattes de cadre avant et arrière offrant toute sécurité pour coureurs et cyclo-touristes.**

(57) Notre invention s'applique uniquement pour les roues à blocage rapide (avant et arrière) et offre une toute grande sécurité pour l'utilisateur de la bicyclette. Les pattes avants se fixent par (soudage, brasage ou collage) sur les deux fourreaux de la fourche. Chacune des pattes arrière se fixent sur le tube appelé base et sur le tube appelé hauban (gauche et droit) du cadre.

EP 0 022 891 A1

./...

Croydon Printing Company Ltd.

Fig. 1

Fig. 4

Projet de Brevet " Pattes de cadre avant et arrière offrants toute sécurité pour coureurs et cyclo touristes " présenté par Mr. CALLERAME et Mr. DECOSSEAUX .

— — — — — — — — — — — — — — — — — — — — — — — — — —

Ces pièces peuvent être fabriquées en diverses matières : acier forgé trempé – acier doux laminé à chaud – duralumin. L'invention se présente sous cette forme :

A) Pattes avants droite et gauche (Pg.1 des dessins)

Pour introduire la roue avant il faut placer l'axe de la roue dans les deux ouverture des deux pattes avant des fourches, lorsque celle-ci se trouve dans la gorge (arrêtée contre les deux ergots), il faut exercer une petite traction vers l'extérieur sur les deux fourreaux de la fourche et ainsi permettre à la roue de prendre la bonne position.

B) Deux systèmes de pattes arrières :

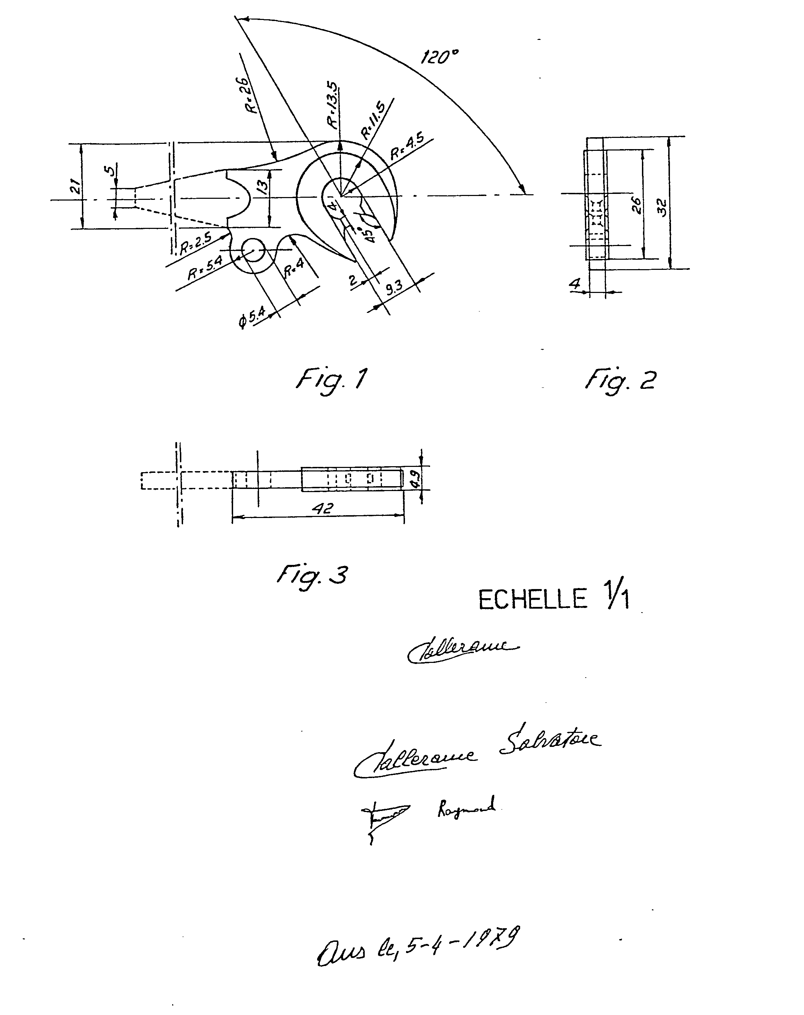

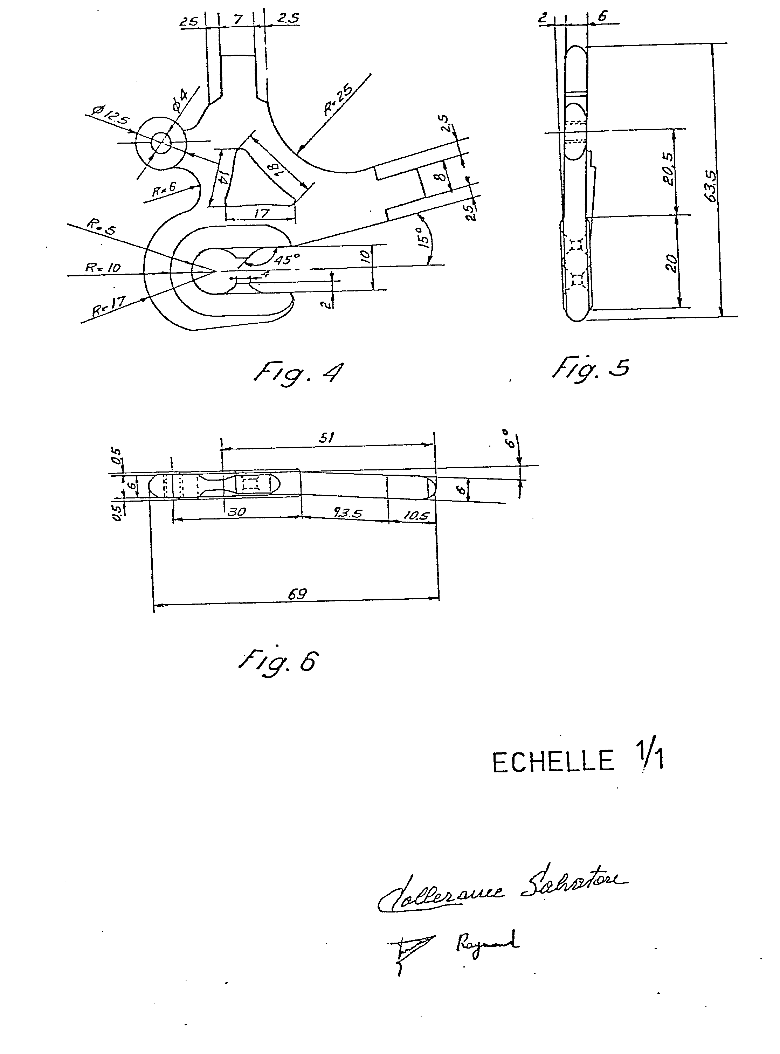

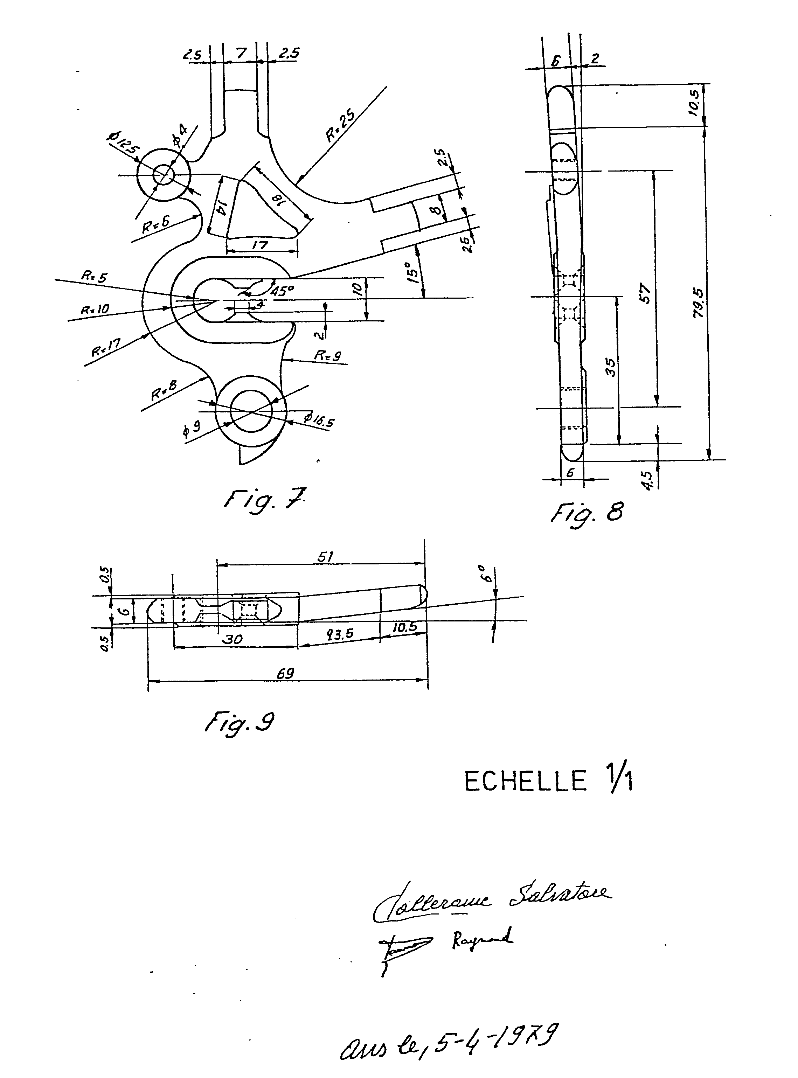

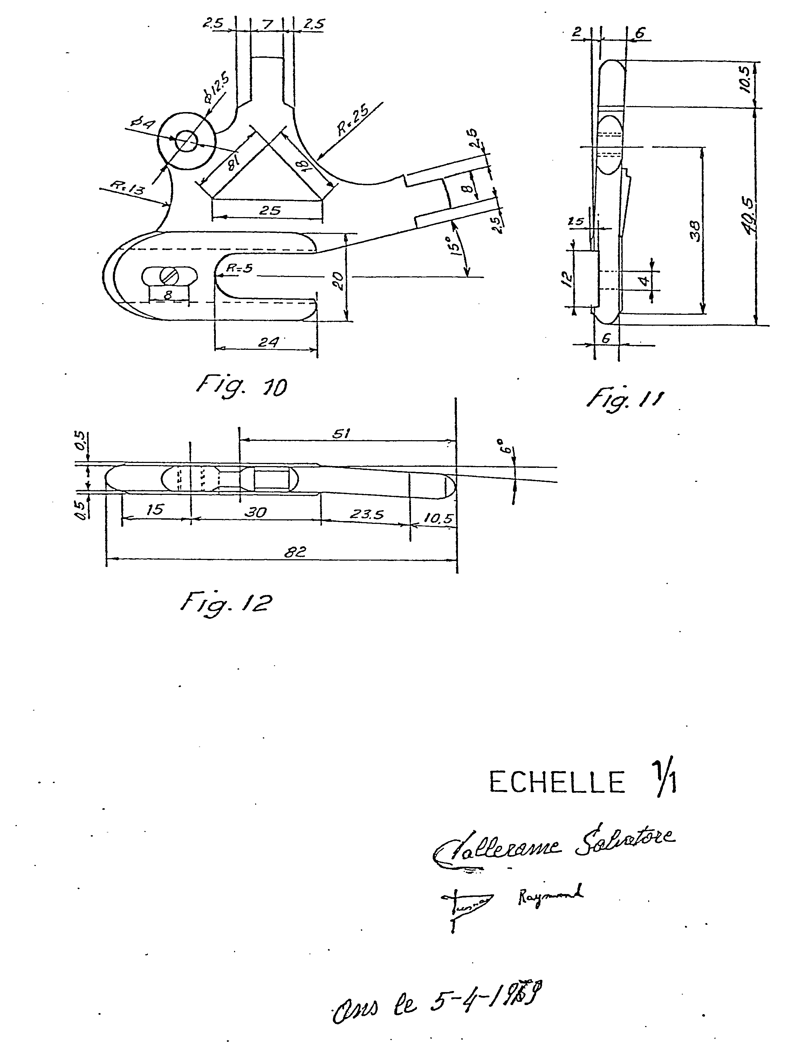

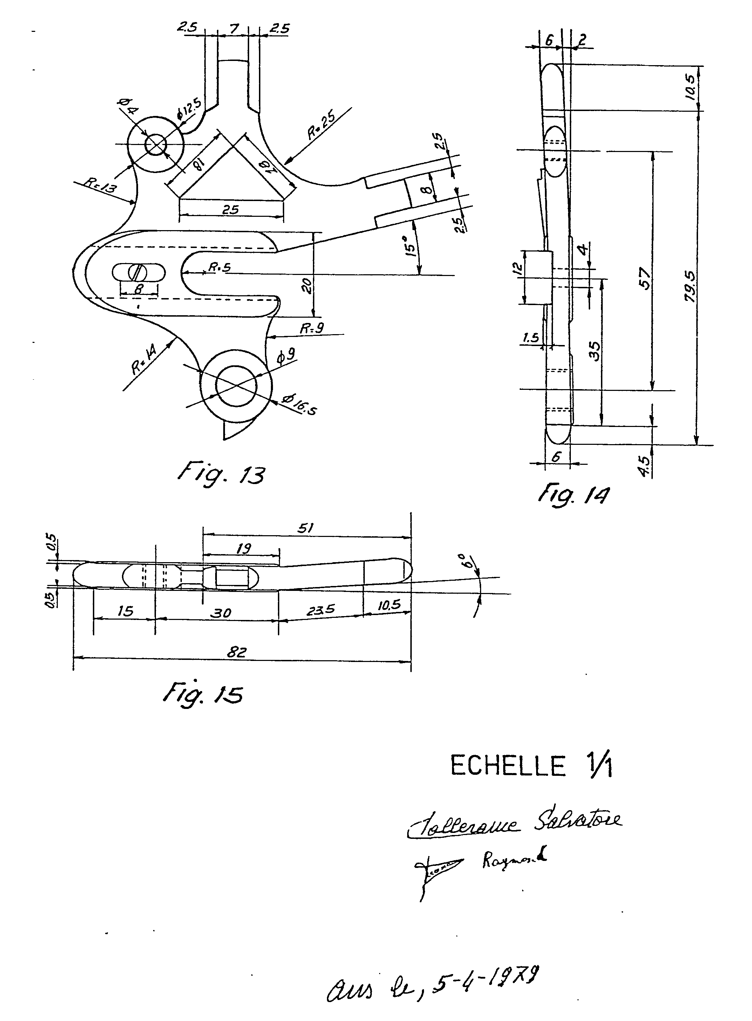

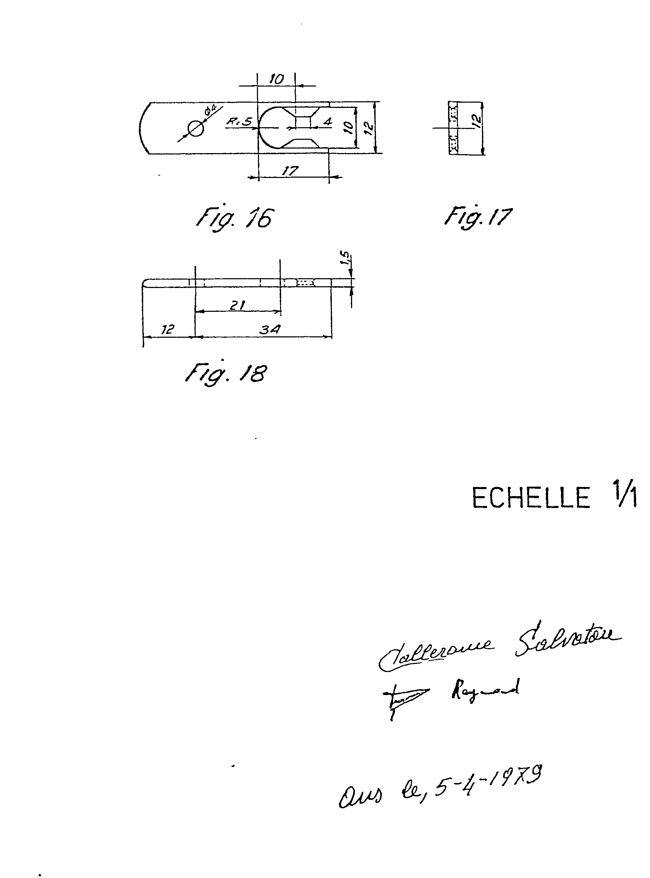

1. Deux petits ergots biseautés faisant partie intégrale de chacune des pattes arrière gauche (Pg.2 du dessin) et arrière droite (Pg.3 du dessin) .

Pour introduire la roue arrière il faut placer l'axe de la roue dans les deux ouverture des pattes arrière gauche et droite. Lorsque celle-ci est arrêtée par les deux petits ergots il faut exercer une petite traction vers l'extérieur sur les haubans et ainsi permettre à la roue de prendre la bonne position.

2. Pattes arrière gauche (Pg.4 du dessin) et arrière droite (Pg.5 du dessin) dans lesquelles se trouvent une rainure ou viendra coulisser la plaque avec les deux petits ergots biseautés (Pg.6 du dessin) qui permettra le réglage du parallélisme des roues à l' aide de la boutonnière qui se trouve sur les pattes (Pg.4et5 du dessin). Ce système à plaque coulissante permet le réglage du parallélisme des roues ainsi que le rapprochement et l'éloignement de la roue par

Ans le, 5-4-1979    Callerame Salvatore
                    Raymond

rapport au tube de selle. Le réglage de la roue arrière s'éffectue à l'aide d'une vis auto reglable qui se fixe sur la plaque coulissante et la boutonnière qui se trouve sur la patte. Cela permet le réglage de la roue en mouvement d'avant ou arrière par rapport au tube de selle.

Une fois la roue placée, elle ne pourrait plus sortir dans le cas ou l'on n'oublierait de bloquer le système de blocage rapide ou s'il n'y en aurait pas de blocage rapide.

Donc, impossible de perdre la roue même en cas ou le blocage rapide serait décallé. De préférence il vaut toujours mieux de mettre le blocage rapide mais il n'est pas nécessaire d'effectuer une force considérable pour le bloquer.

Même remarque pour la roue arrière que pour la roue avant.

Le système arrière fait le même office que le système avant mais en plus il empêche que la roue arrière se mette en travers (dans les deux bases) sous l'effort effectué par le cycliste lorsqu'il pédale surtout si leblocage n'est pas fermé à bloc.

*Ollerame Salvatore*

*Raymond.*

*Ans le, 5-4-1979*

REVENDICATIONS

1) Patte de fourche avant ou arrière de cycle comportant une partie échancrée pour le passage de la broche de l'axe de roue à blocage rapide, caractérisée par la présence de petites aspérités (pointes) sur les faces internes de l'échancrure en vue de maintenir l'axe de roue à blocage rapide au fond de celle-ci lorsque les moyens de blocage habituels n'ont pas été mis ou mal mis ou sont déficients.

En plus le système arrière empêche la roue de se mettre de travers dans le cadre.

2) Patte de fourche suivant revendication 1) caractérisée par le fait que les petites aspérités (pointes) font partie d'une plaque coulissante comportant l'échancrure et montée de façon réglable sur les pattes arrières.

*Fig. 1*

*Fig. 2*

*Fig. 3*

ECHELLE 1/1

*Tallerame*

*Tallerame Salvatore*

*Raymond*

*Ans le, 5-4-1979*

0022891

Fig. 4

Fig. 5

Fig. 6

ECHELLE 1/1

0022891

Fig. 7

Fig. 8

Fig. 9

ECHELLE 1/1

ans le, 5-4-1979

Fig. 10

Fig. 11

Fig. 12

ECHELLE ⅟1

*Vallerame Salvatore*

*Raymond*

*Ans le 5-4-1979*

Fig. 13

Fig. 14

Fig. 15

ECHELLE 1/1

Tolleraine Salvatore

Raymond

Ans le, 5-4-1979

Fig. 16

Fig. 17

Fig. 18

ECHELLE 1/1

Calleroure Salvatou

Raymond

Ans le, 5-4-1979

**Office européen des brevets**

**RAPPORT DE RECHERCHE EUROPEENNE**

Numero de la demande

EP 79 87 0008

| DOCUMENTS CONSIDERES COMME PERTINENTS | | | CLASSEMENT DE LA DEMANDE (Int Cl. ) |
|---|---|---|---|
| Catégorie | Citation du document avec indication. en cas de besoin. des parties pertinentes | Revendica-tion concernée | |
| | US - A - 3 610 659 (GERARDE)<br>\* Figures 1-7; colonne 2, lignes 38-75; colonne 3, lignes 1-32 \*<br>--<br>US - A - 3 894 751 (FUHRMAN)<br>\* Figures 1-7; colonne 2, lignes 37-67; colonne 3, lignes 1-46 \*<br>--<br>US - A - 3 976 307 (NORIYUKI OGISU)<br>\* Figures 1-9; colonne 2, lignes 28-68; colonne 3, lignes 1-29 \*<br>--<br>CH - A - 248 994 (BALLAT)<br>\* Figures 1-5; page 1, lignes 23-53 \*<br>-- | 2<br><br>1<br><br>1<br><br>2 | B 62 K 25/02 |
| A | US - A - 4 121 850 (ROSS)<br>\* Figures 1-4; colonne 1, lignes 32-58 \*<br>---- | 1 | |

DOMAINES TECHNIQUES RECHERCHES (Int. Cl. ³)

B 62 K

CATEGORIE DES DOCUMENTS CITES

X. particulièrement pertinent
A arriere-plan technologique
O. divulgation non-écrite
P document intercalaire
T. theorie ou principe à la base de l'invention
E. demande faisant interférence
D. document cite dans la demande
L: document cite pour d'autres raisons

&: membre de la même famille.
document correspondant

Le présent rapport de recherche a ete établi pour toutes les revendications

| Lieu de la recherche | Date d'achevement de la recherche | Examinateur |
|---|---|---|
| La Haye | 20-02-1980 | VANNESTE |

OEB Form 1503.1   06.78